# EUROPÄISCHE PATENTSCHRIFT

(11) **EP 3 331 759 B1**
(45) Veröffentlichungstag und Bekanntmachung des Hinweises auf die Patenterteilung: **27.11.2019**
(21) Anmeldenummer: 16754396.6
(22) Anmeldetag: 27.07.2016
(51) Int. Cl.: B64C 31/036, B63B 35/79

(54) **SCHIRMKAPPE, INSBESONDERE FÜR EINEN GLEIT-, FALL-, FLEXKITE- ODER SURFKITESCHIRM**
CANOPY, IN PARTICULAR FOR A PARAGLIDER, PARACHUTE, FLEXKITE, OR SURFKITE CANOPY
CALOTTE, EN PARTICULIER POUR VOILE DE PARAPENTE, DE PARACHUTE, DE CERF-VOLANT FLEXIBLE OU DE PLANCHE AÉROTRACTÉE

(30) Priorität: 04.08.2015 DE 202015005513 U
(43) Veröffentlichungstag der Anmeldung: 13.06.2018
(73) Patentinhaber: Swing Flugsportgeräte GmbH, 82290 Landsberied (DE)
(72) Erfinder: NESLER, Michael, 39050 Tiers (IT)
(74) Vertreter: Laufhütte, Dieter
(86) Internationale Anmeldenummer: PCT/EP2016/001300
(87) Internationale Veröffentlichungsnummer: WO 2017/021001

(56) Entgegenhaltungen:
- EP-A2- 0 985 601
- DE-A1- 3 903 779
- DE-A1-102008 034 999
- US-A1- 2002 134 890

## Beschreibung

Die Erfindung betrifft eine Schirmkappe, insbesondere für einen Gleit-, Fall-, Flexkite- oder Surfkiteschirm, bestehend aus einem Obersegel und einem Untersegel sowie aus profilbildenden Profilrippen.

EP 0 985 601 A2 beschreibt eine Schirmkappe.

Die Schirmkappe entsprechend der vorliegenden Erfindung soll sich auf beliebige Schirmkappen beziehen, wie sie beispielsweise bei Gleitschirmen, Fallschirmen, Flexkiteschirmen oder Surfkiteschirmen verwendet werden. Dabei sollen auch entsprechende Schirmkappen für Modelle, also beispielsweise Fallschirmmodelle, Flexkitemodell etc. beinhaltet sein. In gleicher Weise sind Zugsegel für Schiffe und Kites für Höhenenergiegewinnung sowie auch Schirmkappen beim Einsatz in Segelbooten, wie sie unter der Bezeichnung Parasailor bekannt wurden, umfasst.

Mit dem Begriff Schirm, beispielsweise als Gleitschirm, wird regelmäßig als Oberbegriff die vollständige Ausrüstung bezeichnet, also beispielsweise die Ausrüstung zum Gleitschirm, die im Wesentlichen aus einer Schirmkappe, beispielsweise der Gleitschirmkappe besteht, die durch die Leinen mit dem den Piloten aufnehmenden Gurtzeug verbunden ist. Die Schirmkappe weist jeweils eine zweilagige Tragfläche auf, die in Ober- und Untersegel unterteilt und oftmals aus einem Nylonstoff angefertigt ist. Zur Profilgebung der Schirmkappe sind zwischen Ober- und Untersegel senkrecht stehende Profilrippen eingearbeitet, die den gesamten Innenraum der Schirmkappe in eine Vielzahl von in Flugrichtung parallel zueinanderliegenden Kammern unterteilt.

Optimale Flugeigenschaften bzw. eine optimale Auftriebserzeugung stellt sich bei einer tragflächenähnlichen Profilgebung der Schirmkappe ein. An der Vorderkante der Schirmkappe, auch als Anströmkante bezeichnet, sind ein oder mehrere Eintrittsöffnungen angeordnet, über die während der Flugphase Luft ins Kappeninnere gelangt und dort angestaut wird. Der resultierende Überdruck im Kammerinneren sorgt für die gewünschte Profilgebung des Gleitschirms.

Die in Flugrichtung ausgeformten Kammern der derzeit eingesetzten Gleitschirmkappen und Fallschirmkappen werden in der Öffnungs- und Flugphase über die vorderen Eintrittsöffnungen über das Staudruckprinzip durchgängig befüllt, um eine aerodynamisch günstige Profilform zu erzeugen. Beim Hochziehen des Schirms in der Startphase, insbesondere bei wenig Gegenwind, ist der Füllprozess bis zur Ausformung eines tragenden Profils im Zenit besonders kritisch. Zum einen erfordert die Erzeugung des notwendigen Staudrucks (Vorwärtsgeschwindigkeit) durch die aktive Arm- und Laufbewegung des Piloten einen hohen Kraftaufwand. Zum anderen erzeugt das asymmetrische Profil ein Knickmoment, welches oft zum so genannten Überschießen des Segels und somit zu einem Startabbruch führt.

In der Flugphase von Gleitschirmen sind beispielsweise die durch Turbulenzen verursachten sogenannten Einklapper des Gleitschirmsegels besonders kritisch. Hierbei bricht der Innendruck des Doppelsegels in weiten Bereichen zusammen und verliert seine aerodynamisch tragende Funktion. Die Wiederbefüllung der Kammern benötigt viel Zeit und erzeugt eine Verlusthöhe von bis zu 100 m. Diese Phase ist durch eine hohe Fallgeschwindigkeit und Rotationsneigung gekennzeichnet. Diese Phase entspricht dem Öffnungsvorgang eines Fallschirms. Hier ist die Pendelneigung während des Öffnungsvorgangs besonders kritisch. In einigen Notsituationen ist der Pilot oder der Schirm nicht mehr in der Lage, den Befüllvorgang zu reaktivieren oder die Rotation zu beenden, sodass schwere Unfälle nicht auszuschließen sind.

Aufgabe der vorliegenden Erfindung ist es, eine gattungsgemäße Schirmkappe dahingehend weiterzubilden, dass kritische Situationen im Flug weitgehend vermieden werden.

Erfindungsgemäß wird diese Aufgabe durch die Kombination der Merkmale des Anspruchs 1 gelöst.

Erfindungsgemäß wird durch das Vorsehen der zwei getrennten Druckbereiche innerhalb der Schirmkappe, welche unterschiedliche Öffnungs- und Entleerungszeiten aufweisen, eine flugphasenoptimierte Befüllung bzw. Entlüftung der Schirmkappe ermöglicht. Somit ist eine Kontrolle und extreme Verbesserung der aerodynamischen flugphysikalischen Eigenschaften der Schirmkappe in gestörten Flugphasen, beim Hochziehen der Schirmkappe, beim Start und beim Öffnen der Schirmkappe gegeben. Im Ergebnis werden Grenzsituationen entschärft, die Verlusthöhe im Störungsfall und der Kraftaufwand beim Hochziehen wesentlich verringert, die Füllphase bis zur tragenden Phase entscheidend verkürzt und das Überschießen der Schirmkappe beim Startvorgang bzw. das Pendeln eines Fallschirms verhindert.

Weitere bevorzugte Ausgestaltungen der Erfindung ergeben sich aus den sich an dem Hauptanspruch anschließenden Unteransprüchen.

Der Luftaustausch zwischen den Druckbereichen kann durch die Dimensionierung der Öffnungen und/oder Ventile so eingestellt werden, dass sich in den Zellen unterschiedliche Öffnungs- und Entleerungszeiten ergeben.

Alternativ können die zwei oder mehreren Druckbereiche auch luftdicht voneinander getrennt sein, die Querrippen dichten die Zellen/Druckbereiche demnach gegenseitig ab. In diesem Fall erfolgt die Be-/Entlüftung der Druckbereiche vorzugsweise über separate Öffnungen und/oder Ventile, durch die Luft von außen in den Druckbereich strömen bzw. entweichen kann. Die separaten Öffnungen und/oder Ventile sind idealerweise derart dimensioniert sind, so dass sich für die Druckbereiche/Zellen unterschiedliche Öffnungs- und Entleerungszeiten ergeben.

Vorteilhaft werden die in Anströmungsrichtung vorne liegenden Zellen beim Befüllen schneller befüllt werden als die hinteren Zellen. Hierdurch wird insbesondere beim Start verhindert, dass beispielsweise eine Gleitschirmkappe überschießt. Es erfolgt weiterhin kein Aushebeln und es ist ein geringerer Kraftaufwand zum Hochziehen notwendig.

Gemäß einer weiteren vorteilhaften Ausgestaltung der Erfindung werden die in Anströmungsrichtung hinten liegenden Zellen beim Entleeren langsamer entleert als die vorderen Zellen. Hierdurch wird eine höhere Knicksteifigkeit der gesamten Schirmkappe erzielt. Es erfolgt kein oder nur ein sehr geringes Wegdrehen. Die Wiederöffnung des Schirms wird wesentlich beschleunigt. Schließlich wird der Höhenverlust wesentlich reduziert.

Die Erfindung betrifft schließlich einen Gleit-, Fall-, Flexkite- oder Surfkiteschirm mit einer Schirmkappe, die die vorgenannten Merkmale enthält.

Weitere Merkmale, Einzelheiten und Vorteile der Erfindung werden anhand eines in der Zeichnung dargestellten Ausführungsbeispiels näher erläutert.

Es zeigen:
- Figur 1:: einen schematischen Querschnitt durch eine Schirmkappe nach einem ersten Ausführungsbeispiel der vorliegenden Erfindung in der Füllphase,
- Figur 2:: eine Darstellung der Schirmkappe gemäß Figur 1 im normalen Flug,
- Figur 3:: eine Schirmkappe gemäß der Figuren 1 und 2 bei einer Störung im Flug,
- Figur 4:: eine Draufsicht auf einen konventionellen Gleitschirm während der Flugphase und mit deformierter Fläche,
- Figur 5:: die Darstellung gemäß Figur 4, hier jedoch bei einer erfindungsgemäßen Schirmkappe,
- Figur 6:: den Druckverlauf des Innendrucks im Überdruckbereich, einer erfindungsgemäßen Schirmkappe und einer Schirmkappe nach dem Stand der Technik im Vergleich,
- Figur 7:: eine Draufsicht und zwei teilweise geschnittene Ansichten durch eine Schirmkappe gemäß einer zweiten Ausführungsform der vorliegenden Erfindung und
- Figur 8:: acht unterschiedliche Ausführungsformen von Schirmkappen gemäß der vorliegenden Erfindung.

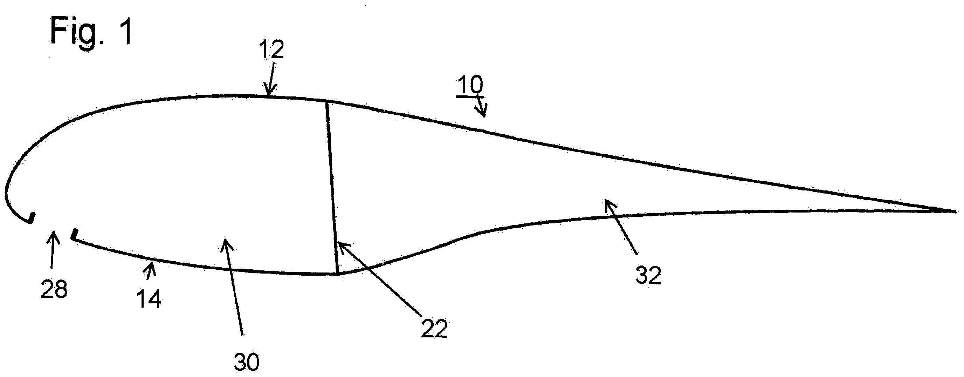

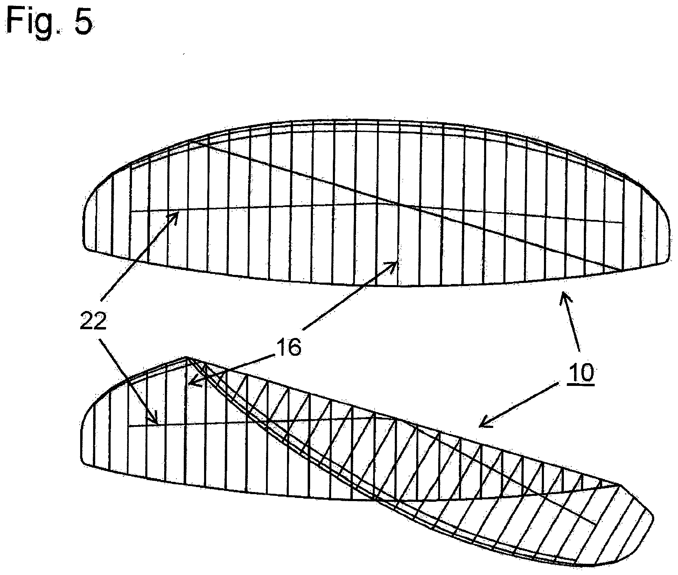

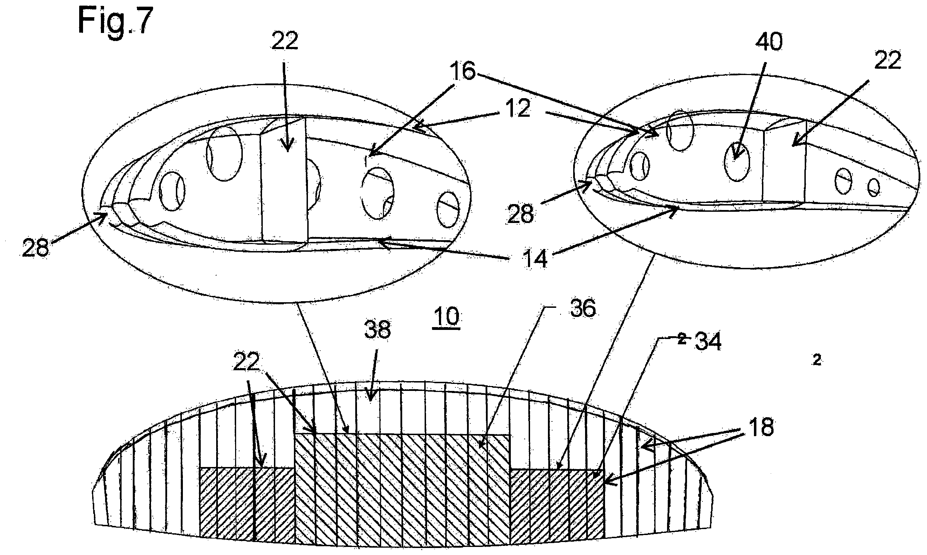

Figur 1 zeigt einen schematischen Querschnitt durch eine Schirmkappe 10 in ihrer Füllphase. Die Schirmkappe 10 weist ein Obersegel 12 und ein Untersegel 14 auf. Im Schnitt hier nicht dargestellt sind die das Profil bildenden Profilrippen 16. Diese sind aber beispielsweise in den Darstellungen gemäß der Figuren 5 oder 7 zu erkennen. Durch das Vorsehen der Querrippe 22 werden zwei getrennte Druckbereiche 30 und 32 ausgebildet. Die Druckbereiche 30 und 32 weisen unterschiedliche Öffnungs- und Entleerungszeiten auf. Diese werden durch entsprechende hier in der Darstellung nicht näher gezeigte Öffnungen bzw. Ventile sowohl in Längsrichtung als auch in Querrichtung gesteuert. Mit 28 ist die Eintrittsöffnung in den vorderen Druckbereich 30 dargestellt. Hier strömt die Luft ein.

In Figur 1 ist nun eine Schirmkappe 10 während des Startvorgangs in der Füllphase gezeigt. Hier wird insbesondere deutlich, dass die unterschiedlichen Druckbereiche 30 und 32 unterschiedliche Öffnungs- und Entleerungszeiten aufweisen. Der Druckbereich 30 ist durch den Staudruck, der über die Eintrittsöffnung 28 aufgebaut wurde, bereits gefüllt. Der zweite Druckbereich 32 ist dagegen noch nicht vollständig aufgefüllt. Hierdurch ergibt sich ein insbesondere für die Startphase eines Gleitschirms vorteilhafte Formgebung des Schirmkappenquerschnitts. Hier erfolgt kein Aushebeln bzw. Überschießen und beim Hochziehen ist für den Piloten nur ein geringerer Kraftaufwand notwendig.

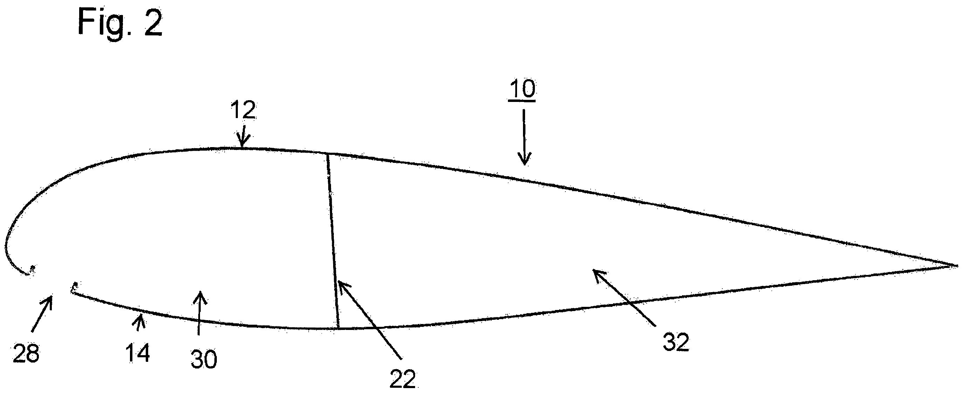

In Figur 2 wird der Querschnitt der Schirmkappe 10 im normalen Flug gezeigt. Hier sind die Druckbereiche 30 und 32 gefüllt. Es herrscht in beiden Druckbereichen der gleiche Druck. Bei dieser Situation besteht keinerlei Unterschied zu den üblichen Systemen.

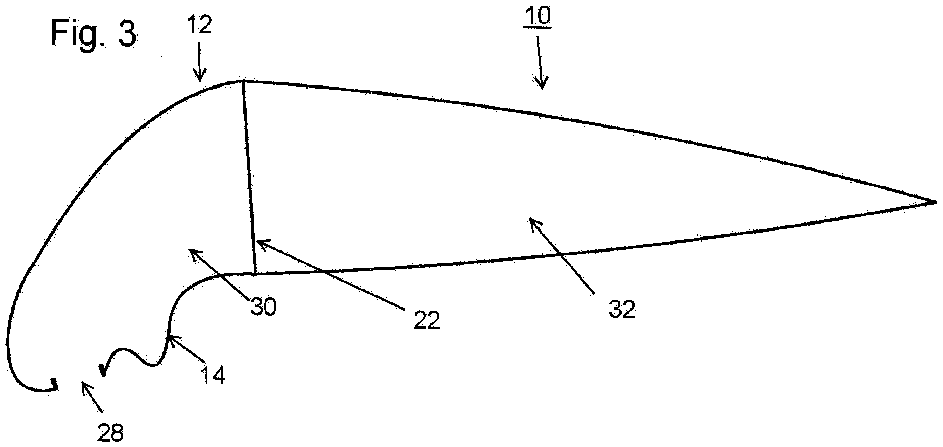

Figur 3 zeigt nun den Querschnitt der Schirmkappe 10 bei einer Störung im Flug, beispielsweise beim Auftreten von Turbulenzen. Hier sieht man, dass der erste Druckbereich 30 sich bereits entleert hat, während der zweite Druckbereich 32 sich nur verzögert entleert und zu dem hier dargestellten Zeitpunkt noch eine hinreichend hohe Stabilität aufweist, sodass die Schirmkappe 10 beispielsweise eines Gleitschirms noch einen hinreichend großen tragenden Anteil aufweist, der zu einer höheren Knicksteifigkeit der Schirmkappe 10 führt und ein Wegdrehen erschwert oder weitgehend verhindert. Auch die Wiederöffnung des Schirms kann beschleunigt werden und beim Absinken während der Störung verliert der Pilot weniger Höhe.

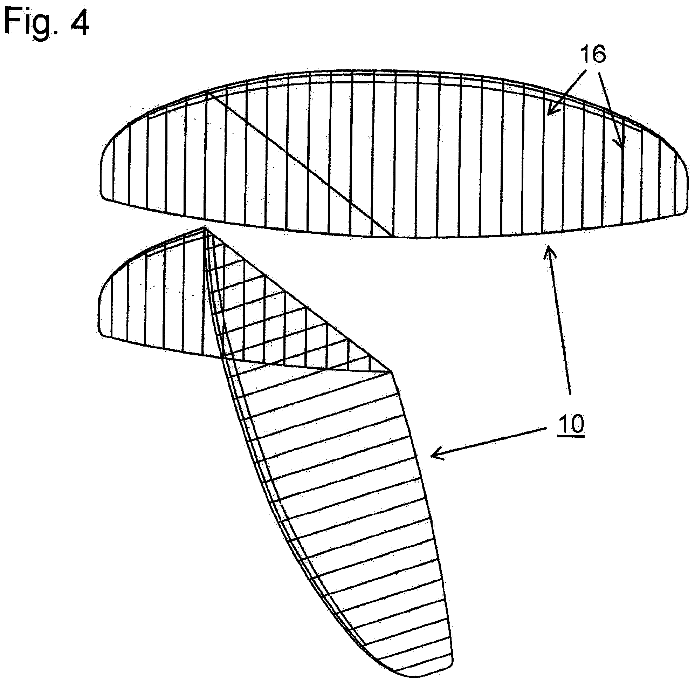

Das entsprechende Knickverhalten einer Schirmkappe in konventioneller Ausführung ist in Figur 4 gezeigt. Hier sind die Klapplinie und die deformierte Fläche bei konventionellen Gleitschirmen 10 dargestellt.

Im Vergleich hierzu sind in Figur 5 die Klapplinie und die deformierte Fläche bei dem erfindungsgemäßen System gezeigt.

Hier wird durch die beiden Druckbereiche und die hierdurch gebildeten Zellen eine höhere Knickstabilität erreicht, die zu einem stabilerem Flugverhalten bei dieser Störung führt.

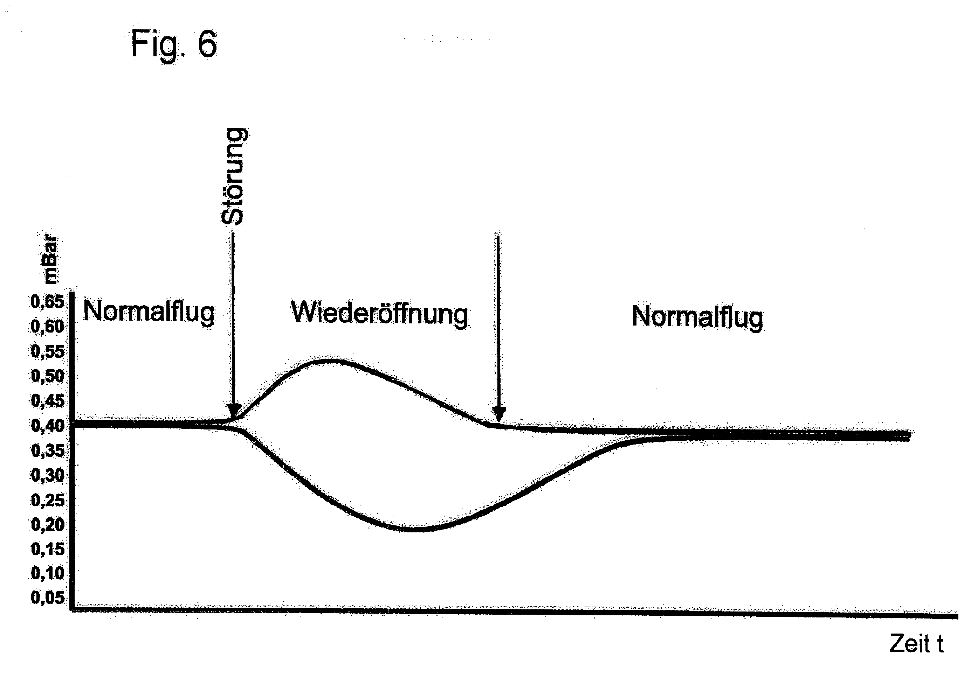

In Figur 6 ist der Innendruckverlauf über die Zeit einer konventionellen Schirmkappe 10 eines traditionellen Gleitschirms (untere Kurve) mit dem Innendruckvorlauf einer erfindungsgemäßen Schirmkappe 10 verglichen. Während hier beim Normalflug gleiche Druckverhältnisse vorliegen, zeigt sich bei der Störung für die Schirmkappe 10 gemäß der vorliegenden Erfindung ein höherer Innendruck in der Wiederöffnungsphase, was zu einer schnelleren Befüllung und somit einer schnelleren Stabilität der Schirmkappe führt.

In der Figur 7 ist zunächst in der Draufsicht zu erkennen, dass hier unterschiedliche Zellen gebildet sind. Diese Zellen 34, 36 und 38 bilden hier die unterschiedlichen Druckbereiche, welche über Querrippen 22 und die das Profil bildenden Profilrippen 16 voneinander abgetrennt sind. Im Bereich der Verbindungsstelle der Querrippen 22 mit dem Ober- und Untersegel 12, 14 sind Öffnungen/Ventile für den Luftaustausch ersichtlich. Zwischen den Profilrippen innerhalb einer Kammer 34, 36 oder 38 sind die Profilrippen 16 allerdings geschlossen, bzw. weisen nur kleine Öffnungen oder Ventile auf. Die jeweiligen Öffnungen und Ventile sind dabei so gewählt, dass sich in den verschiedenen Druckbereichen, d.h. Zonen 34, 36 und 38 unterschiedliche Öffnungs- und Entleerungszeiten ergeben.

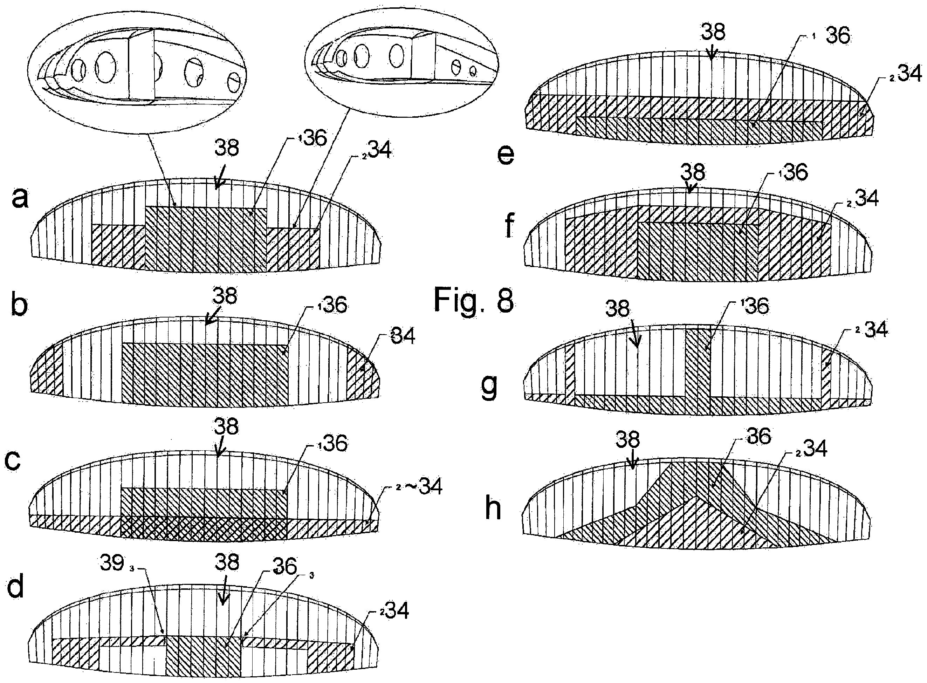

In Figur 8 sind nun unterschiedliche Anordnungen für die getrennten Druckbereiche 34, 36, 38 und 39 gezeigt, die hier selbstverständlich auch nur beispielhaft dargestellt sind. Durch diese unterschiedlichen Druckbereiche bzw. Zonen 34, 36, 38 und 39 kann das Flugverhalten der Schirmkappe 10 je nach Wunsch optimiert werden.

Alternativ zum gezeigten Ausführungsbeispiel könnten die einzelnen Druckbereich 30, 32 auch gegeneinander luftdicht verschlossen sein, d.h. die Querrippen 22 und/oder die Profilrippen sehen keine Öffnungen/Ventile zum Luftaustausch vor. Zur Be-/Entlüftung des Druckbereichs 32 müsste in diesem Fall eine eigene Eintrittsöffnung vorgesehen werden, die beispielsweise in Anströmungsrichtung kurz hinter der Querrippe 22 am Untersegel 14 eingebracht sein. Durch geeignete Dimensionierung der beiden Eintrittsöffnungen wird das zuvor erwähnte Flugverhalten erzielt.

## Patentansprüche

1. Schirmkappe (10), insbesondere für einen Gleit-, Fall-, Flexikite- oder Surfkiteschirm, bestehend aus einem Obersegel (12) und einem Untersegel (14) sowie aus ein Profil bildenden Profilrippen (16),
wobei in der Schirmkappe (10) mindestens zwei getrennte Druckbereiche (30, 32) ausgebildet sind, die unterschiedliche Öffnungs- und Entleerungszeiten aufweisen, wobei die Druckbereiche durch Zellen gebildet werden,
**dadurch gekennzeichnet,**
**dass** die Zellen durch Querrippen (22) gebildet werden, die einen Luftaustausch zwischen den Druckbereichen ermöglichen, wobei der Luftaustausch zwischen den Druckbereichen durch Öffnungen in den Querrippen oder zwischen den Druckbereichen durch Ventile in den Querrippen (22) erfolgt.

2. Schirmkappe (10) nach Anspruch 1, **dadurch gekennzeichnet, dass** der Luftaustausch zwischen den Druckbereichen durch die Dimensionierungen der Öffnungen und/oder Ventile so einstellbar ist, dass sich in den Zellen unterschiedliche Öffnungs- und Entleerungszeiten ergeben.

3. Schirmkappe (10) nach Anspruch 1, **dadurch gekennzeichnet, dass** wenigstens zwei getrennte Druckbereiche/Zellen gegeneinander luftdicht abgeschlossen sind und die wenigstens zwei Druckbereiche durch separate Öffnungen und/oder Ventile belüftet und/oder entlüftet werden, wobei die separaten Öffnungen und/oder Ventile derart dimensioniert sind, dass sich in den Druckbereichen/Zellen unterschiedliche Öffnungs- und Entleerungszeiten ergeben.

4. Schirmkappe (10) nach Anspruch 2 oder 3, **dadurch gekennzeichnet, dass** die in Anströmungsrichtung vorne liegenden Zellen beim Befüllen schneller befüllt werden als die hinteren Zellen.

5. Schirmkappe (10) nach einem der vorherigen Ansprüche, **dadurch gekennzeichnet, dass** die in Anströmungsrichtung hinten liegenden Zellen beim Entleeren langsamer entleert werden als die vorderen Zellen.

6. Gleit-, Fall-, Flexikite- oder Surfkiteschirm mit einer Schirmkappe nach einem der vorhergehenden Ansprüche.

## Claims

1. A canopy (10), in particular for a paraglider, parachute, flexkite, or surfkite, comprising an upper sail (12) and a lower sail (14), and ribs (16) forming a profile, wherein at least two separate pressure zones (30, 32) are formed in the canopy (10) that have different opening and emptying times, wherein the pressure zones are formed by cells, **characterized in that** the cells are formed by transverse ribs (22) that enable an air exchange between the pressure zones, with the air exchange between the pressure zones taking place through openings in the transverse ribs (22) or through valves in the transverse ribs (22).

2. A canopy (10) in accordance with claim 1, **characterized in that** the air exchange between the pressure zones is adjustable by the dimensioning of the openings and/or valves such that different opening and emptying times result in the cells.

3. A canopy (10) in accordance with claim 1, **characterized in that** at least two separate pressure zones/cells are closed in an airtight manner with respect to one another and the at least two pressure zones are ventilated and/or vented through separate openings and/or valves, with the separate openings and/or valves being dimensioned such that different opening and emptying times result in the pressure zones/cells.

4. A canopy (10) in accordance with claim 2 or claim 3, **characterized in that** the cells disposed at the front in the direction of inflow are filled faster than the rear cells on the filling.

5. A canopy (10) in accordance with one of the preceding claims, **characterized in that** the cells disposed at the rear in the direction of inflow are emptied more slowly than the front cells on the emptying.

6. A paraglider, parachute, flexkite, or surfkite having a canopy in accordance with one of the preceding claims.

## Revendications

1. Calotte (10), en particulier pour voile de parapente, de parachute, de cerf-volant flexible ou de planche aérotractée, constituée d'un extrados (12) et d'un intrados (14) ainsi que de nervures de profil (16) formant un profil,
au moins deux zones de pression (30, 32) séparées étant réalisées dans la calotte (10), lesquelles présentent des temps de gonflage et de dégonflage différents, les zones de pression étant formées par des alvéoles,
**caractérisée en ce que**
les alvéoles sont formées par des nervures transversales (22), qui permettent un échange d'air entre les zones de pression, l'échange d'air étant effectué entre les zones de pression par des ouvertures dans les nervures transversales ou entre les zones de pression par des vannes dans les nervures transversales (22).

2. Calotte (10) selon la revendication 1, **caractérisée en ce que** l'échange d'air entre les zones de pression peut être réglé par le dimensionnement des ouvertures et/ou vannes de telle sorte que des temps de gonflage et de dégonflage différents sont obtenus dans les alvéoles.

3. Calotte (10) selon la revendication 1, **caractérisée en ce qu'**au moins deux zones de pression / alvéoles séparées sont fermées l'une par rapport à l'autre de manière étanche à l'air et les au moins deux zones de pression sont gonflées et/ou dégonflées par des ouvertures et/ou vannes séparées, les ouvertures et/ou vannes séparées étant dimensionnées de telle manière que différents temps de gonflage et de dégonflage sont obtenus dans les zones de pression / alvéoles.

4. Calotte (10) selon la revendication 2 ou 3, **caractérisée en ce que**, lors du gonflage, les alvéoles situées à l'avant dans la direction d'attaque sont gonflées plus rapidement que les alvéoles arrière.

5. Calotte (10) selon l'une des revendications précédentes, **caractérisée en ce que**, lors du dégonflage, les alvéoles situées à l'arrière dans la direction d'attaque sont dégonflées plus lentement que les alvéoles avant.

6. Voile de parapente, de parachute, de cerf-volant flexible ou de planche aérotractée comprenant une calotte selon l'une des revendications précédentes.
